# DEMANDE DE BREVET EUROPEEN

(11) **EP 3 831 568 A1**
(43) Date de publication de la demande: **09.06.2021**
(21) Numéro de dépôt: 19213621.6
(22) Date de dépôt: 04.12.2019
(51) Int. Cl.: B29C 48/00, B29C 48/07, B29C 48/90, B29C 48/88, B29C 59/04

(54) **PROCÉDÉ DE MARQUAGE D'UN ARTICLE DECORATIF**

(71) Demandeur: The Swatch Group Research and Development Ltd, 2074 Marin (CH)
(72) Inventeur: CÉLÉRIER, Yannick, 71510 Aluze (FR); LAFIN, Benoît, 71370 Saint-Christophe-en-Bresse (FR); BLANC PETIOT, Catherine, 71380 Saint-Marcel (FR); RANNOUX, Claire, 1202 Genève (CH); FRANÇOIS, Nicolas, 2000 Neuchâtel (CH)
(74) Mandataire: ICB SA

(57) **Abrégé**

La présente invention se rapporte à un procédé en ligne de marquage d'un substrat (1) en matière synthétique extrudée, ledit procédé comprenant les étapes consistant à :
- Extruder la matière synthétique à travers une filière d'extrusion (3) pour former le substrat (1),
- Marquer ledit substrat (1) en faisant défiler le substrat (1) issu de la filière d'extrusion entre deux rouleaux (2a,2b) montés rotatifs et thermorégulés avec un rouleau supérieur (2a) et un rouleau inférieur (2b), un desdits rouleaux présentant une empreinte (5) formant le négatif d'un décor ou d'une texture à marquer sur une face du substrat (1), ce même rouleau ou l'autre desdits rouleaux comportant au moins une encoche (6) permettant de guider le substrat (1) lors de son passage dans la filière d'extrusion (3) et entre les deux rouleaux (2a,2b).

La présente invention se rapporte également à l'installation comprenant en ligne la filière d'extrusion (3) et le dispositif de marquage (2).

## Description

### Domaine technique

La présente invention se rapporte à un procédé de marquage en ligne d'un substrat en matériau synthétique directement issu d'une filière d'extrusion.

### Arrière-plan technologique

Pour marquer des plastiques, plusieurs procédés sont connus et utilisés. On peut citer l'embossage, la gravure laser ou encore les procédés d'impression traditionnels.

La gravure laser est la méthode la plus décrite pour marquer les plastiques. Elle présente plusieurs avantages tels que la durabilité et la flexibilité du motif à graver. En revanche, l'équipement est très coûteux et surtout la majorité des plastiques ne peut pas être marquée efficacement sans l'utilisation d'additifs sensibles au laser. La sélection des additifs et du type de laser n'est pas aisée et demande pour chaque formulation plastique un nombre d'essais important.

Les procédés d'impression jet d'encre et numérique sont compatibles avec une personnalisation d'un profilé en ligne et permettent l'impression de motifs variés. En revanche, le marquage s'use dans le temps et n'est dès lors pas pérenne.

L'embossage consiste à faire passer la matière fondue entre des cylindres chauffés pour fabriquer un film plan, ce dernier passant ensuite entre des cylindres gravés avec un motif. Ce procédé décrit, par exemple, dans le document US 4,744,936 permet ainsi uniquement l'obtention de films marqués ayant une épaisseur constante. Il n'est pas adapté pour marquer des profilés de forme complexe avec des épaisseurs variables telles que dans le cas des bracelets de montre.

### Résumé de l'invention

Pour pallier aux inconvénients précités, la présente invention propose un nouveau procédé de marquage qui permet de graver aussi bien des substrats de forme simple que des substrats de forme complexe, qui permet de réaliser un marquage pérenne tout en étant peu coûteux. Ce procédé peut être avantageusement utilisé pour décorer, personnaliser ou encore réaliser un marquage anti-contrefaçon sur un profilé en matériau synthétique.

Plus précisément, le procédé selon l'invention est un procédé en ligne de marquage d'un substrat en matière synthétique extrudée, comprenant les étapes consistant à :
- Extruder la matière synthétique à travers une filière d'extrusion pour former le substrat,
- Marquer ledit substrat en faisant défiler le substrat issu de la filière d'extrusion entre deux rouleaux montés rotatifs et thermorégulés avec un rouleau supérieur et un rouleau inférieur, un desdits rouleaux présentant une empreinte formant le négatif d'un décor ou d'une texture à marquer sur une face du substrat, ce même rouleau ou l'autre desdits rouleaux comportant au moins une encoche permettant de guider le substrat lors de son passage dans la filière d'extrusion et entre les deux rouleaux.

Préférentiellement, l'encoche est destinée à recevoir le substrat sur toute sa largeur.

Selon une variante, l'encoche est destinée à recevoir une portion de la largeur du substrat. Par exemple, cette portion peut consister en un relief présent à l'issue du procédé d'extrusion et destiné à se loger dans l'encoche de forme complémentaire.

Avantageusement, le procédé selon l'invention comporte une étape de refroidissement forcé entre l'étape d'extrusion et l'étape de marquage de manière à fixer le profil du substrat extrudé tout en maintenant une certaine déformabilité du matériau de manière à permettre son marquage.

A l'issue du marquage, le substrat est mis à dimension à l'aide d'un outil d'étampage mécanique, par découpe jet d'eau, laser ou ultrasons afin d'obtenir l'article décoratif souhaité.

Ce procédé de marquage présente pour avantage d'être en ligne avec le procédé d'extrusion, ce qui permet de masquer le temps de marquage et donc de réduire le coût.

Le profil général du substrat n'est pas modifié lors du marquage ce qui permet de conserver les dimensions du profilé issu de l'extrusion et de marquer tout type de profilé.

Une infinité de motifs et de texture est réalisable via ce procédé, y compris des textures micrométriques pour éviter la contrefaçon. En outre, le marquage obtenu grâce à ce procédé ne se dégrade pas dans le temps. Il est par ailleurs très fin et précis.

Par rapport à un procédé d'injection, ce procédé combinant l'extrusion et le marquage présente plusieurs avantages :
- Il s'agit d'un procédé en ligne, c'est-à-dire d'un procédé qui permet une productivité élevée par rapport à un procédé batch tel que celui de l'injection.
- La personnalisation du motif ou de la texture se fait à moindre coût car l'investissement pour une paire de rouleaux est nettement moindre que pour un moule d'injection.

La présente invention se rapporte également à l'installation comprenant en ligne la filière d'extrusion et le dispositif de marquage.

### Brève description des figures

L'invention sera décrite ci-après de manière plus détaillée à l'aide des dessins annexés, donnés à titre d'exemples nullement limitatifs, dans lesquels :
La figure 1 représente schématiquement la ligne continue de fabrication d'articles décoratifs incluant la filière d'extrusion et le dispositif de marquage séparés par des moyens de refroidissement.
La figure 2a représente avec une vue tridimensionnelle le dispositif de marquage muni d'un rouleau d'embossage et d'un contre-rouleau comportant une encoche selon l'invention.
La figure 2b représente une vue partielle en coupe selon le plan A-A.
La figure 3 représente une vue partielle en coupe selon un même plan A-A d'une variante du dispositif de marquage.
La figure 4 représente une vue en perspective de deux bandes à l'issue de l'extrusion avec respectivement à une ou à chaque extrémité latérale de la bande une structure tubulaire creuse.
La figure 5 représente une vue partielle en coupe selon un même plan A-A d'une autre variante du dispositif de marquage.
La figure 6 représente un brin de bracelet extrudé et marqué selon le procédé de l'invention.

### Description détaillée de l'invention

La présente invention se rapporte à un procédé de marquage d'un substrat issu d'un procédé d'extrusion. Le procédé de marquage selon l'invention permet de graver en ligne des profilés synthétiques afin d'obtenir des motifs variés et/ou une texturation de surface. Le procédé est plus spécifiquement décrit pour le marquage d'une pièce d'habillage en horlogerie ou en bijouterie et en particulier pour le marquage d'un bracelet de montre ou de bijou. Il peut cependant s'appliquer au marquage de tout substrat extrudé en vue de réaliser un article décoratif.

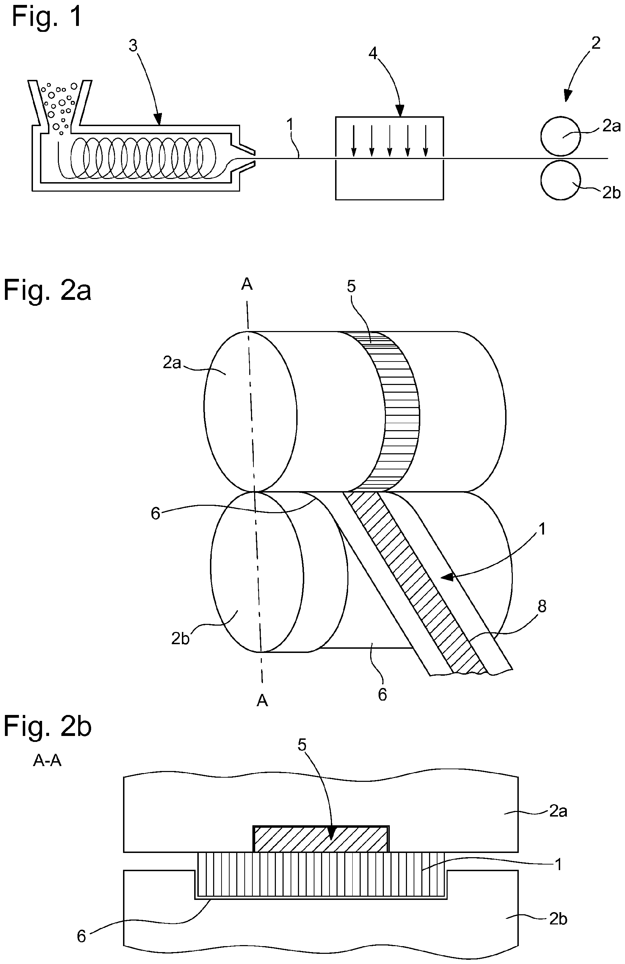

Selon la présente invention, le marquage est réalisé sur un substrat synthétique 1 à l'aide d'un dispositif de marquage 2 qui est en ligne avec une filière d'extrusion 3 tel que schématisé à la figure 1. Préférentiellement, l'installation comporte entre la sortie de la filière d'extrusion 3 et le dispositif de marquage 2 des moyens de refroidissement 4 tels qu'un bac à eau ou un tunnel muni de jet d'air qui permettent de refroidir légèrement le substrat après l'extrusion de manière à figer le profilé. L'installation comporte également après le dispositif de marquage des moyens de découpe (non représentés) : jet d'eau, ultrasons, laser ou encore un outil d'étampage mécanique pour conduire à l'objet final.

Le dispositif de marquage 2 comporte deux rouleaux 2a,2b montés rotatifs et thermorégulés. Selon l'invention, un des rouleaux, le rouleau supérieur 2a dans l'exemple illustré aux figures 2a et 2b, comporte une empreinte 5 en relief et/ou en creux représentant un motif (lettres, chiffres, dessins, etc.) ou une texture destinée à réaliser le marquage 8 sur une face du substrat 1. Selon l'invention, ce même rouleau 2a ou l'autre rouleau 2b comporte au moins une encoche 6 s'étendant sur toute la circonférence du rouleau. Cette encoche permet de guider le substrat lors de l'extrusion et du marquage. Différentes configurations pour le positionnement et la taille des encoches sont possibles.

Selon la variante préférée représentée aux figures 2a et 2b, le rouleau 2b opposé à celui 2a comportant l'empreinte 5 comporte une encoche 6 qui est de la largeur de la bande extrudée 1. Cette encoche a une profondeur inférieure ou égale à l'épaisseur maximale de la bande extrudée. Il est également envisageable que sa profondeur soit supérieure à l'épaisseur de la bande si l'empreinte sur le rouleau opposé est en relief.

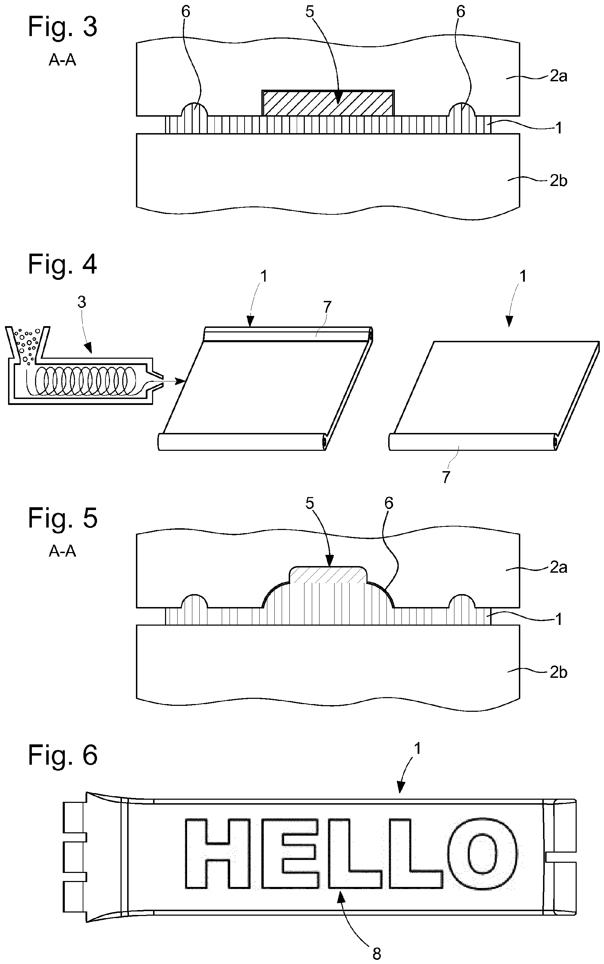

Selon une autre variante, un des rouleaux comporte une ou plusieurs encoches d'une largeur inférieure à celle de la bande. De tels exemples sont illustrés aux figures 3 et 5. A la figure 3, un des rouleaux, le rouleau supérieur 2a avec l'empreinte 5 dans l'exemple illustré, comporte deux encoches 6 respectivement de part et d'autre de l'empreinte 5. Lors du marquage, la matière déformable se positionne dans les encoches 6 et assure le maintien du substrat 1. Cette matière dans les encoches forme soit de la matière perdue destinée à être découpée, soit une zone en relief qui est maintenue sur l'objet final. Ainsi, la figure 5 représente une configuration avec une seule encoche 6 disposée en regard de l'empreinte 5 sur le même rouleau 2a. La matière remplissant l'encoche forme un relief qui est maintenu sur l'objet final. Il est également possible de positionner l'encoche en regard de l'empreinte sur l'autre rouleau. Il est également envisageable qu'une ou les deux encoches ait une forme correspondante à un relief du substrat issu de l'extrusion. Ainsi, dans le cas d'un bracelet, la bande issue de l'extrusion peut avoir une largeur correspondant à la longueur d'un brin ou des deux brins du bracelet. On se réfère à la demande EP pour ce mode de réalisation. Comme illustré à la figure 4, la bande extrudée 1 comporte à une ou à chacune de ses extrémités latérales une structure tubulaire creuse en saillie 7. Les structures tubulaires creuses forment des trous débouchants destinés à recevoir respectivement une barrette permettant l'accroche aux cornes d'une boîte de montre ou à une boucle.

Outre la ou les encoches ayant une forme complémentaire à des reliefs présents sur la bande extrudée, le ou les rouleaux peuvent présenter un profilé adapté à des variations d'épaisseur de la bande issue de la filière d'extrusion de manière à maintenir le profilé à la sortie du dispositif de marquage.

Selon l'invention, les matières synthétiques utilisées lors de l'extrusion sont des mélanges comprenant au moins un polymère thermoplastique. Préférentiellement, le mélange comprend au moins un élastomère thermoplastique (TPE) choisi parmi la liste suivante:
TPE-O - Oléfines thermoplastiques
TPE-S - Composé SBS, SEBS ou SEPS styrénique
TPE-V - Composé PP/EPDM vulcanisé
TPE-E - Composé de copolyester
TPE-U - Polyuréthane thermoplastique
TPE-A - Polyamide thermoplastique.

Le procédé se déroule comme suit. La bande est extrudée dans la filière d'extrusion. Elle passe ensuite dans les moyens de refroidissement de manière à figer les dimensions du profilé tout en maintenant une matière déformable apte à être marquée et, le cas échéant, apte à remplir la ou les encoches. En sortie des moyens de refroidissement, la matière a typiquement une température de l'ordre de 50-80°C. A titre d'exemple, pour une bande en TPE-S, la matière a une température de 180°C en sortie de la filière d'extrusion et une température de 70°C en sortie des moyens de refroidissement. La bande extrudée encore chaude passe ensuite entre les deux rouleaux du dispositif de marquage. Le motif ou la texture d'un des rouleaux est alors transféré à la bande. La profondeur de marquage est pilotée par la pression imposée entre les deux rouleaux et le gravage du rouleau. Le substrat marqué est ensuite mis à dimension à l'aide d'un outil d'étampage mécanique, par découpe jet d'eau, laser ou ultrasons pour obtenir l'article décoratif. A titre d'exemple, un brin de bracelet extrudé et marqué avec le procédé selon l'invention est représenté à la figure 6.

### Légende

(1) Substrat ou bande extrudée
(2) Dispositif de marquage
   a. Rouleau supérieur
   b. Rouleau inférieur
(3) Filière d'extrusion
(4) Moyens de refroidissement
(5) Empreinte
(6) Encoche
(7) Structure tubulaire creuse en saillie
(8) Marquage

## Revendications

1. Procédé en ligne de marquage d'un substrat (1) en matière synthétique extrudée, ledit procédé comprenant les étapes consistant à :
- Extruder la matière synthétique à travers une filière d'extrusion (3) pour former le substrat (1),
- Marquer ledit substrat (1) en faisant défiler le substrat (1) issu de la filière d'extrusion entre deux rouleaux (2a,2b) montés rotatifs et thermorégulés avec un rouleau supérieur (2a) et un rouleau inférieur (2b), un desdits rouleaux présentant une empreinte (5) formant le négatif d'un décor ou d'une texture à marquer sur une face du substrat (1), ce même rouleau ou l'autre desdits rouleaux comportant au moins une encoche (6) permettant de guider le substrat (1) lors de son passage dans la filière d'extrusion (3) et entre les deux rouleaux (2a,2b).

2. Procédé selon la revendication 1, comprenant une étape de refroidissement forcé entre l'étape d'extrusion et l'étape de marquage du substrat (1), ledit substrat ayant une température supérieure ou égale à 50°C à l'issue du refroidissement forcé.

3. Procédé selon la revendication 1 ou 2, comprenant après l'étape de marquage, une étape de mise à dimension du substrat (1) pour réaliser un article décoratif.

4. Procédé selon l'une des revendications précédentes, **caractérisé en ce que** l'encoche (6) a la largeur du substrat (1) avec ledit substrat (1) se positionnant au sein de l'encoche (6).

5. Procédé selon la revendication 4, **caractérisé en ce que** l'encoche (6) a une épaisseur égale ou inférieure à l'épaisseur maximale du substrat (1).

6. Procédé selon la revendication 4, **caractérisé en ce que** l'encoche (6) a une épaisseur supérieure à l'épaisseur maximale du substrat (1) si l'empreinte (5) est en relief.

7. Procédé selon l'une des revendications 1 à 3, **caractérisé en ce que** l'encoche (6) a une largeur inférieure à la largeur du substrat (1).

8. Procédé selon la revendication 7, **caractérisé en ce que** ledit même rouleau ou l'autre desdits rouleaux comporte deux encoches (6).

9. Procédé selon la revendication 8, **caractérisé en ce que** les deux encoches (6) sont respectivement disposées de part et d'autre de l'empreinte (5).

10. Procédé selon la revendication 7, **caractérisé en ce que** l'encoche (6) a une forme complémentaire à un relief présent sur le substrat (1) issu de la filière d'extrusion (3).

11. Procédé selon la revendication 10, **caractérisé en ce que** le substrat est destiné à réaliser un bracelet de montre ou de bijou et **en ce que** l'encoche (6) a une forme complémentaire à une structure tubulaire creuse (7) du substrat (1), la creusure de la structure tubulaire creuse (7) formant un trou débouchant destiné à recevoir une barrette permettant l'accroche aux cornes d'une boîte de montre ou à une boucle.

12. Procédé selon la revendication 11, **caractérisé en ce que** ledit même rouleau ou l'autre desdits rouleaux comporte deux encoches (6) ayant une forme complémentaire à deux structures tubulaires creuses (7) du substrat (1).

13. Procédé selon la revendication 7, **caractérisé en ce que** l'empreinte (5) et l'encoche (6) sont disposés sur un même rouleau avec l'empreinte (5) en regard de l'encoche (6).

14. Installation comprenant une filière d'extrusion (3) d'un substrat (1) et à la suite de la filière d'extrusion (3) un dispositif de marquage (2) du substrat (1), le dispositif de marquage (2) comportant deux rouleaux (2a,2b) montés rotatifs et thermorégulés avec un rouleau supérieur (2a) et un rouleau inférieur (2b), un desdits rouleaux présentant une empreinte (5) formant le négatif d'un décor ou d'une texture à marquer sur une face du substrat (1), ce même rouleau ou l'autre desdits rouleaux présentant au moins une encoche (6) permettant de guider le substrat (1) lors de son passage au sein de la filière d'extrusion (3) et du dispositif de marquage (2).

15. Installation selon la revendication 14, comprenant des moyens de refroidissement (4) entre la filière d'extrusion (3) et le dispositif de marquage (2).

16. Installation selon la revendication 14 ou 15, **caractérisé en ce que** l'encoche (6) a la largeur du substrat (1).

17. Installation selon la revendication 14 ou 15, **caractérisé en ce que** l'encoche (6) a une largeur inférieure à la largeur du substrat (1).

18. Installation selon la revendication 17, **caractérisé en ce que** l'encoche (6) a une forme complémentaire à un relief destiné à être présent sur le substrat (1) issu de la filière d'extrusion (3).
